# EUROPEAN PATENT APPLICATION

(11) **EP 3 461 633 A1**
(43) Date of publication of application: **03.04.2019**
(21) Application number: 18182770.0
(22) Date of filing: 10.07.2018
(51) Int. Cl.: B32B 5/02, B32B 5/16, B32B 13/02, B32B 13/04, B32B 13/14, C09K 21/02

(54) **FIRE PROTECTIVE PLASTERBOARD**

(30) Priority: 02.10.2017 EP 17194372
(71) Applicant: Orosz Sen, László, 4254 Nyiradony (HU); Koczkás, Zsolt, 4482 Kótaj (HU); Rozinka, Zsolt Illés, 4033 Debrecen (HU); Leskovics, Zoltán, 4400 Nyíregyháza (HU); Pánya, Sándor, 4433 Debrecen (HU)
(72) Inventor: Orosz Sen., László, 4254 Nyíradony (HU)
(74) Representative: Farago-Schauer, Peter Andreas

(57) **Abstract**

The present invention relates to a fire protective plasterboard including: a first layer including a mixture of a mineral and fire proof cement; a second layer including a fire proof binder expanded heat-insulating layer based on perlite and / or ceramic fiber which is associated with or connected to the first layer; and a third layer including a mixture of a mineral and fire proof cement which is associated with or connected to the second layer. Furthermore, plasterboard may be manufactured by a method including a first heat treatment step for manufacturing the first and/or the third layers, in which the mineral is ground to a particles size of preferably 8 to 10 mm grain, the same is rotated in a rotating oven in order to enhance the creation of ceramic bonds; and/or a second heat treatment step for manufacturing the first and/or third layers, in which four fractions of the mineral, preferably obtained from the first heating step, are provided and grinded to sizes ranging from preferably about 80 microns to preferably about 2 mm.

## Description

Products that are labeled as "fire protective" or "fire resistant" or "fire retardant" (in the following only called "fire protective") in the current construction product range are actually understood and interpreted as fire protection plasterboard casings and this products have been used in a wide range of applications in the construction industry.

Conventionally fire protective plasterboard products are made from REA GYPSUM (CaSO₄, 2H20) which is a by-product of heat power plants. If REA GYPSUM is not be used for fire protective plasterboards, this material is usually treated as waste.

The conventional fire protective plasterboards are burning through at temperatures of about 500 to about 560 degrees Celsius because of the hydraulic bonding properties thereof.

Therefore, it is an aim of the present invention to provide for a novel fire protective plasterboard that is able to withstand at least twice as much heat as the conventional fire protective plasterboard products.

The above aim and further objects which will become apparent from the appended claims are achieved by a fire protective plasterboard as defined in claim 1.

The invention also provides for a method for manufacturing a fire protective plasterboard as defined in claim 10.

Further advantageous aspects of the present invention are set out in the dependent claims.

According to the present invention the fire protective plasterboard thereof includes a mineral. Preferably the mineral is hard, has a high melting point and is 100% recyclable (i.e. is a so called inert waste). Minerals complying with the foregoing requirements are basalt, granite, barite, cinnabarite and dolomite. Further preferably, the minerals according to the invention should also have good radiation shielding properties. Among the former mentioned minerals barite and cinnabarite have good radiation shielding properties. Further, dolimite, which as well known in the art is an anhydrous carbonate mineral composed of calcium magnesium carbonate, is advantageous as it is readily available at low costs. Due to the presence of a mineral, the fire protective plasterboards of the present invention are much more efficient than the conventional fire protective plasterboards, as the components of the mineral combine to form a more uniformly combustible ceramic bond, and thus provide for an enhanced fire protective function.

The present invention provides for a reliable alternative solution to conventional fire protection gypsum plasterboard systems in the following areas: subsequent fire protection of existing residential buildings, increased fire safety in public buildings and the use in buildings constructed in lightweight construction.

A particularly advantageous use of the present invention is for the constructions of partition walls in environments with a high risk of fire in order to provide for a highly fire-proof partitioning element for buildings like gas stations or ready-made warehouses. Also an advantageous use of the present invention is for public facilities like train stations, airports, sports facilities, cultural facilities, hotels and the like.

According to an advantageous aspect of the present invention, the surface of the novel, mineral containing, fire protective plasterboard can be mixed with uniformly homogenizeable oxides in accordance with the ceramic bond, and subsequently the plasterboard can be coated with any color according to the customer's wishes and no longer requires re-dyeing or conservation.

The invention will be now described in more detail based on currently preferred embodiments thereof. Nevertheless, the person skilled in the art will appreciate that variations of the currently preferred embodiments are possible without departing from the scope of the invention.

Basically the fire protective plasterboard according to the present invention can be manufactured as a construction wall element, a partition wall, a floor, a ceiling wrapping board and the like and has substantially improved fire resistance properties due to the use of mined mineral based raw materials and other associated natural minerals.

The manufacturing of the fire protective plasterboard according to the present invention is carried out using conventional manufacturing techniques to the extent that such manufacturing techniques are not described below. In other words, all manufacturing techniques described hereinbelow are nonconventional and accordingly part of the invention.

According to a preferred embodiment the fire protective plasterboard according to the present invention is provided as a three-layered combination of minerals in the products to be manufactured.

A first layer may include an optimal particle composition including a mixture of the mineral and fire proof cement. The first layer forms a fire protective chemical and ceramic bond layer.

A second layer may include a fire proof binder expanded heat-insulating layer based on perlite and / or ceramic fiber which is associated with or connected to the first layer.

A third layer may include an optimal particle composition including a mixture of the mineral and fire proof cement. The third layer forms a fire protective chemical and ceramic bond layer and is associated with or connected to the second layer.

To achieve the most efficient fire resistance parameters - taking into account the mineralogical properties of the mineral - the first and the third fire protective layers must be preferably subjected to heat treatment during the manufacturing process thereof. For instance the heat treatment may be performed two times. In this way a protection against combustibility is guaranteed up to 1300 degrees Celsius.

In a first heat treatment step, in which the mineral is ground to a particles size of 8 to 10 mm grain, the same is rotated in a rotating oven in order to enhance the creation of ceramic bonds.

In a second heat treatment step four fractions of the mineral preferably obtained from the first heating step are provided which are grinded to sizes ranging from about 80 microns to 2 mm. The four fractions having enhanced ceramic bonds due to the first heat treatment step are mixed with the fire proof cement according to a suitable formulation. For the purpose of their chemical bonding, the mixture material obtained is heat-treated again, which will result the approx. 1300 degrees Celsius fire-resistant, functional board. In this second heat treatment step the mixture is placed in the forms corresponding to the shape of the plasterboard.

The second layer including the fire proof binder expanded heat-insulating layer is placed between the so manufactured first and third plasterboards and the three layers are sealed together with a hermetic edge-sealing method.

The thickness of the first and third plasterboard layers and the thermal insulation second layer determines the subsequent use of the composite. In other words, a thinner three layer composite may form a "board" while a thicker composite may form a "masonry block" or a "wall".

The sealing-edge of the fire protective plasterboard is made preferably from fireproof dilatation material, and the design of the product itself enables the surface mounting in fast-bonding procedure.

As the heat treatment steps may be the part of the manufacturing process of the fire protective plasterboard, it is possible to mix different oxides in the surface treatment process of the first and third layers. With this added value, this option gives the ability to create the surface in any color, so the fire protective plasterboard of the invention does not require any painting or other quality and aesthetic preservation.

While the present invention can be used with a wide range of minerals like for instance basalt, granite, andesite, dacite, rhyolite, chalcopyrite, enargite, luzonite, siderite, ankerite, hematite, magnetite, pyrite, pyrrhotite, arsenopyrite, barite, cinnabarite, realgar, antimonite, rhodochrosite, calcite, fluorite, gibbsite (also called hydragillite), boehmite, zippeite, pyrolusite and rhodochrosite, the preferred minerals according to the present invention are basalt, granite, barite, cinnabarite and dolomite. The foregoing preferred 5 minerals are advantageous inasmuch as they are hard, have a high melting point and are 100% recyclable (i.e. is a so called inert waste). Further preferably, the minerals according to the invention should also have good radiation shielding properties. Among the former mentioned 5 preferred minerals barite and cinnabarite have good radiation shielding properties. Further, dolimite, which as well known in the art is an anhydrous carbonate mineral composed of calcium magnesium carbonate, is advantageous as it is readily available at low costs.

While the first and third layers above have been described as including one mineral only, it is conceivable according to the present invention that combinations of at least two minerals are used in one or both said layers. For instance it is conceivable to use one of basalt, granite and dolomite in combination with one of cinnabarite and barite in order to provide advantageously for a composite with an excellent hardness, fire resistance and radiation shielding properties. It is also conceivable according to the invention that the first layer includes a mineral different from the mineral of the third layer or that the respective minerals of the layers are the same.

Advantageously, the fire proof cement according to the present invention is a rapid hardening Calcium Aluminate Cement (CAC) with high early strength. A cement of the foregoing type is for instance marketed under the name ISTRA 40 by the company Calucem. The ISTRA 40 cement is rapid hardening and composed of calcium aluminates with the following characteristics: high early strength, refractoriness, high abrasion resistance, resistance to biogenic sulphuric acid corrosion (BSAC). ISTRA 40 meets the requirements of EN 14647 for Calcium Aluminate Cements and is controlled in accordance with EN 14647. Further details on the ISTRA 40 CAC can be found in the data sheet thereof as of 09/2014.The fire protective plasterboard of the present invention is particularly advantageous as a high fire resistance up to a temperature in the order of 1600°C to 1700°C can be achieved with said plasterboard while keeping the thickness thereof below 10 mm.

Furthermore, the fire protective plasterboard of the present invention has a weight in the order of 10 kg/m² which is substantially lighter than the weight of conventional gypsum boards, the weight of gypsum boards being in the order of 23 10 kg/m².

Thus, the fire protective plasterboard of the present invention combines the advantages of a lightweight construction with a high fire resistance.

As explained above, the present invention is particularly advantageous, as the fire protection function of the pasteboards thereof is improved substantially (approximately by a factor of two). Further, the present invention is particularly advantageous as the preferred minerals used, like dolomite, are natural materials available at relative low costs.

## Claims

1. A fire protective plasterboard including:
a first layer including a mixture of a mineral and fire proof cement;
a second layer including a fire proof binder expanded heat-insulating layer based on perlite and / or ceramic fiber which is associated with or connected to the first layer; and
a third layer including a mixture of a mineral and fire proof cement which is associated with or connected to the second layer.

2. The fire protective plasterboard according to claim 1, wherein the mineral is selected from a group comprising basalt, granite, barite, cinnabarite and dolomite.

3. The fire protective plasterboard according to claims 1 or 2,
wherein the first layer comprises a further mineral and wherein the further mineral is selected from a group comprising basalt, granite, barite, cinnabarite and dolomite, and/or
wherein the second layer comprises a further mineral and wherein the further mineral is selected from a group comprising basalt, granite, barite, cinnabarite and dolomite.

4. The fire protective plasterboard according to claim 1, wherein the mineral is dolomite.

5. The fire protective plasterboard according to one or more of the preceding claims, further including a sealing extending peripherally to plasterboard and made preferably from fireproof dilatation material.

6. The fire protective plasterboard according to one or more of the preceding claims, wherein the plasterboard is shaped and dimensioned as a construction wall element, a partition wall, a floor, a ceiling wrapping board and the like.

7. The fire protective plasterboard according to one or more of the preceding claims, wherein the first and/or third layers are heat treaded in one or more heating steps and/or wherein the mineral is ground to fractions of various sizes.

8. The fire protective plasterboard according to one or more of the preceding claims, wherein the respective minerals of the first and third layers are the same.

9. The fire protective plasterboard according to one or more of the preceding claims, wherein the respective minerals of the first and third layers are different.

10. A method of manufacturing the protective plasterboard according to one or more of the preceding claims, including:
a first heat treatment step for manufacturing the first and/or the third layers, in which the mineral is ground to a particles size of 8 to 10 mm grain, the same is rotated in a rotating oven in order to enhance the creation of ceramic bonds; and/or
a second heat treatment step for manufacturing the first and/or third layers, in which four fractions of the mineral, preferably obtained from the first heating step, are provided and grinded to sizes ranging from about preferably 80 microns to about preferably 2 mm.

11. The method of claim 10, wherein in the second heat treatment step the mixture is placed in the forms corresponding to the shape of a plasterboard.

12. The method of claims 10 or 11, further comprising the step of associating or connecting the first, second and third layers and preferably the step of providing a sealing extending peripherally to the layers so as to hermetically seals the layers, wherein the sealing is made preferably from fireproof dilatation material.
